Europäisches Patentamt

**European Patent Office**

**Office européen des brevets**

(11) Numéro de publication: **0 159 238**
**B1**

(12) # FASCICULE DE BREVET EUROPEEN

(45) Date de publication du fascicule du brevet:
01.06.88

(51) Int. Cl.⁴: **E 05 B 47/00**

(21) Numéro de dépôt: **85400534.5**

(22) Date de dépôt: **20.03.85**

(54) **Dispositif électromécanique de commande de l'ouverture d'une serrure et serrure de portière de véhicule automobile comportant un tel dispositif.**

(30) Priorité: **20.03.84 FR 8404303**

(43) Date de publication de la demande:
**23.10.85 Bulletin 85/43**

(45) Mention de la délivrance du brevet:
**01.06.88 Bulletin 88/22**

(84) Etats contractants désignés:
**DE GB IT**

(56) Documents cités:
**US - A - 3 757 591**

(73) Titulaire: **ACIERS ET OUTILLAGE PEUGEOT Société dite:, F-25400 Audincourt (Doubs) (FR)**

(72) Inventeur: **Groell, Michel Antoine, 9 bis, Grande Rue de Bondeval, F-25230 Seloncourt (FR)**

(74) Mandataire: **Moncheny, Michel et al, c/o Cabinet Lavoix 2 Place d'Estienne d'Orves, F-75441 Paris Cedex 09 (FR)**

ACTORUM AG

## Description

La présente invention concerne un dispositif électromécanique de commande de l'ouverture d'une serrure, du type selon le préambule de la revendication 1. Elle concerne également une serrure pour partière de véhicule selon le préambule de la revendication 6.

Un problème essentiel, dans le cas de ces serrures, qui constituent un état de la technique connu de la demanderesse bien que celle-ci ne cite aucun document le divulgant, est celui de leur fonctionnement en atmosphère très humide et même de leur résistance à l'eau de pluie, c'est à dire de la protection des organes électriques de ces serrures contre l'humidité. Diverses solutions ont été proposées et certaines d'entre elles ont même permis un fonctionnement correct et durable de la serrure, mais elles supposent généralement la réalisation d'un dispositif relativement complexe et, par suite, coûteux.

La présente invention a pour but de remédier à ces inconvénients en fournissant un dispositif électromécanique particulièrement simple, qui ne comporte pratiquement aucun organe électrique susceptible d'être détérioré par l'humidité.

Cette invention a en effet pour objet un dispositif électromécanique pour une serrure du type ci-dessus, qui comporte une vis entraînée en rotation par un moteur électrique, sur laquelle se déplace en translation un écrou qui est percé d'un taraudage et d'un alésage dont les axes se croisent, le diamètre de l'alésage étant légèrement supérieur à celui de la vis, et qui coopère avec un levier agissant sur une saillie de l'organe de couplage afin de déplacer ce dernier et de provoquer le pivotement du verrou de la serrure dans le sens de l'ouverture, et des moyens pour provoquer le basculement de l'écrou entre une position d'ouverture de la serrure, dans laquelle le taraudage est en prise avec la vis, et une position de débrayage, dans laquelle l'alésage est coaxial avec la vis.

Grâce à cette disposition, l'écrou peut n'être entraîné par la rotation de la vis que pendant son déplacement dans une seule direction. A la fin de cette course active, un simple basculement de l'écrou en plaçant l'alésage parallèlement à la vis, débraye automatiquement le dispositif électromécanique. La vis peut continuer à tourner.

De préférence, un ressort est monté entre l'écrou et un point fixe, de façon à provoquer ce basculement et à ramener l'écrou dans sa position de départ. Aucun contact électrique, ni organe analogue, n'est nécessaire pour assurer l'arrêt ou le démarrage d'un tel dispositif électromécanique. Seul le moteur doit être mis en route. Pratiquement tous les organes sont donc mécaniques et peuvent, par suite, facilement être réalisés de manière à résister à une très forte humidité.

L'invention concerne également une serrure pour portière de véhicule automobile selon la revendication 7.

La description ci-dessous d'un mode de réalisation donné à titre d'exemple non limitatif, et représenté au dessin annexé, fera d'ailleurs ressortir les avantages et caractéristiques de l'invention.

Sur ce dessin:

la fig. 1 est une vue en coupe d'une serrure munie d'un dispositif électromécanique selon l'invention, dans sa position de fermeture;

la fig. 2 est une vue analogue à la fig. 1, de la serrure en position d'ouverture;

la fig. 3 est une vue à plus grande échelle, en coupe axiale, de l'écrou du dispositif électromécanique;

la fig. 4 est un schéma du circuit électrique d'actionnement du dispositif électromécanique.

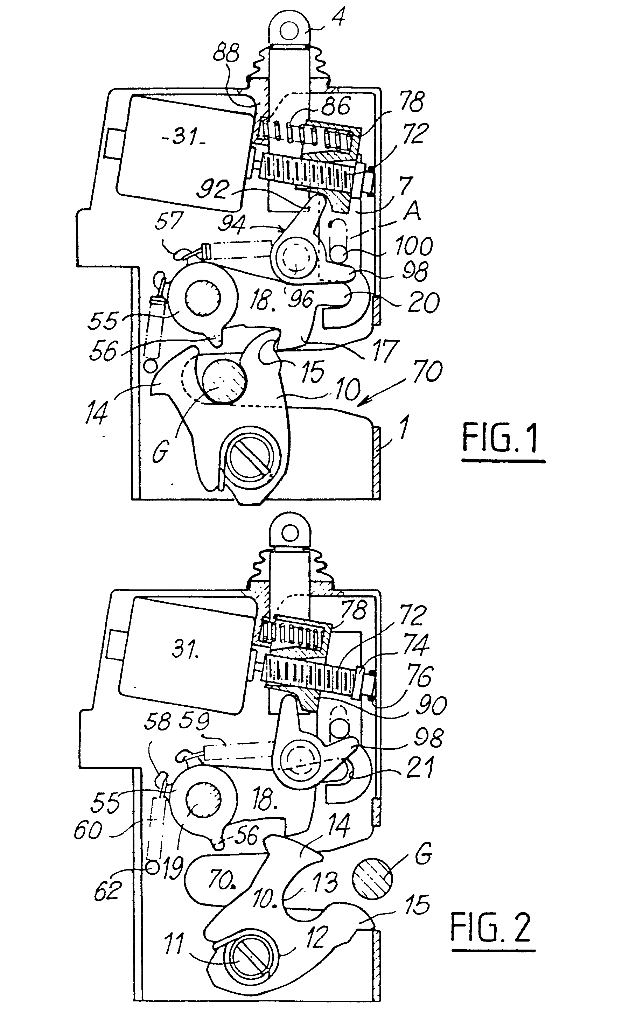

La serrure pour portière de véhicule représentée sur le dessin comporte, de la manière habituelle, un châssis 1 dont le fond est percé d'une fente allongée 70 de passage d'une gâche G portée par le montant de la carrosserie du véhicule et formée de préférence par une portion de tige ronde. Sur le fond du châssis 1 est monté pivotant un pêne 10 comportant deux becs 14, 15, de part et d'autre d'une encoche 13 de réception de la gâche. Un ressort 12, monté sur l'axe 11 d'articulation du pêne, rappelle ce dernier vers sa position d'ouverture représentée sur la fig. 2, dans laquelle le bec 15 appuie sur le bord de l'ouverture 70. Un verrou 18 est également monté pivotant sur un axe 19 fixé dans le fond du châssis. Ce verrou 18 comporte une portion 17, en forme de crochet, destinée à coopérer avec le bec 15 pour maintenir le pêne 10 dans sa position fermée de «deuxième cran». Le crochet 17 peut également coopérer avec le bec 14 dans une position de «premier cran» de la fermeture.

Le verrou 18 est par ailleurs prolongé par un doigt d'accrochage 20 qui vient s'emboîter dans une cavité 21 formée à l'extrémité d'un coulisseau 7 constituant un organe de couplage et de transmission du mouvement entre le mécanisme de verrouillage, constitué par le pêne 10 et le verrou 18, et un dispositif électromécanique de commande de l'ouverture de ce mécanisme de verrouillage. L'organe de couplage 7 est en outre relié à une tirette 4 de commande manuelle.

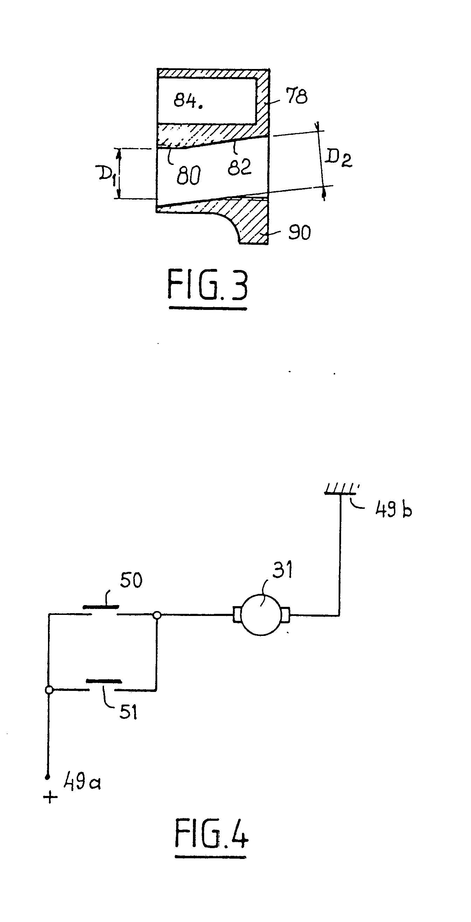

Le dispositif électromécanique comporte un moteur électrique 31 qui entraîne une vis 72 immobilisée axialement grâce à une bride 74 et à des butées 76 portées par la paroi du boîtier. Sur cette vis est monté un écrou 78 qui, comme le montre plus clairement la fig. 3, comporte d'une part un taraudage 80 de diamètre $D_1$ correspondant à celui de la vis 72 et, d'autre part, un alésage 82 de diamètre $D_2$ légèrement supérieur à celui de la vis 72.

L'alésage 82 est incliné par rapport au taraudage et leurs axes se croisent en un point situé sensiblement au centre de l'écrou 78. Ce dernier comporte également un trou borgne 84 dans lequel est logé un ressort 86 qui est en appui, à son extrémité opposée au fond du trou 84, sur une butée fixe 88 solidaire du boîtier 1 et située à proximité du moteur 31, l'axe du ressort 86 étant de préférence parallèle à celui du taraudage 80, de sorte que la rotation de l'écrou est empêchée.

A l'opposé de ce ressort, l'écrou 78 comporte une aile 90 qui est en contact avec un bras 92 d'un levier pivotant 94 articulé sur un axe 96 transversant le châssis 1. Le levier 94 comporte également un second bras 98 qui coopère avec un ergot 100 porté par l'organe coulissant 7.

Dans la position de fermeture de la serrure, représentée sur la fig. 1, le taraudage 80 de l'écrou 78 est en prise avec la vis 72 et situé à l'extrémité de cette vis opposée au moteur 31, c'est-à-dire en butée contre la bride 74. Le bras 98 du levier 94 est en position basse, ce qui permet à l'ergot 100 et à l'organe de couplage 7 d'être également abaissés et de maintenir le verrou 18 en contact avec le bec 15 du pêne 10, la gâche G étant emprisonnée dans l'encoche 13, entre les becs 14 et 15 de ce pêne.

Si le moteur 31 est excité et provoque la rotation de la vis 72, l'écrou 78 se déplace sur cette vis contre l'action du ressort 86 et se rapproche du moteur. Au cours de ce mouvement l'aile 90 pousse le bras 92 et fait basculer progressivement le levier 94, de sorte que le bras 98 soulève l'ergot 100 qui entraîne l'organe de couplage 7. Le verrou 18 bascule progressivement autour de son axe 19, de sorte qu'il libère le bec 15, ce qui permet au ressort 12 de faire basculer le pêne 10 vers sa position d'ouverture en libérant la gâche G, comme le montre la fig. 2.

Lorsque l'écrou 78 est arrivé à l'extrémité de la vis 72, la continuation de la rotation de cette vis s'opposant à l'action du ressort 86 provoque son basculement dans le sens des aiguilles d'une montre en considérant la fig. 2 ou la fig. 3. Par suite, le taraudage 80 est dégagé de la vis 72 tandis que l'alésage 82 vient se placer coaxialement à cette dernière. L'écrou est débrayé et son entraînement est arrêté, même si la vis 72 continue à tourner.

A ce moment le ressort 86 agit donc seul sur l'écrou et peut, par suite, repousser rapidement ce dernier le long de la vis 72 et le ramener en butée contre la bride 74. Un tel coulissement de l'écrou 78 libère le levier 94 et l'ergot 100, mais le crochet 17 du verrou 18 étant en appui sur le bec 14 du pêne 10, le verrou 18 est retenu par ce bec et l'ergot 100 reste immobile. La serrure est toutefois prête à être refermée.

Lors de cette fermeture, la gâche G pénétrant dans la lumière 70 du châssis 1 et dans l'encoche 13 repousse le pêne 10 vers l'intérieur de ce châssis, de sorte que le bec 14 quitte le crochet 17 et que ce dernier vient s'enclencher sur le bec 15. Ce pivotement du verrou 18 provoque un coulissement vers le bas de l'organe de couplage 7 jusqu'à l'appui de l'ergot 100 sur le bras 98, le levier 94 étant dans sa position extrême représentée sur la fig. 1.

Sous l'action de l'ergot 100, le bras 92 du levier 94 exerce un effort sur l'aile 90 de l'écrou 78 et provoque son basculement sur la vis 72. Le taraudage 80 vient donc de nouveau en prise avec la vis 72, ce qui verrouille le dispositif électromécanique et le remet en position d'utilisation, prêt à agir lors d'une nouvelle ouverture de la portière.

La commande électrique d'un tel dispositif est extrêmement simple, comme le montre la fig. 4. Le moteur 31 est en effet relié aux bornes négative 49b et positive 49a d'un générateur électrique, par l'intermédiaire de deux contacteurs de commande 50 et 51 placés respectivement à l'intérieur et à l'extérieur de la portière, près des poignées de manœuvre. Une simple action sur l'un ou l'autre des contacts 50, 51, suffit à mettre le moteur 31 en marche et, par suite, à permettre l'ouverture de la portière.

Ce moteur 31 est ainsi le seul organe électrique présent à l'intérieur du châssis 1, tous les autres organes étant des organes mécaniques, ce qui réduit à un minimum la protection nécessaire contre l'humidité et notamment la pluie.

Bien entendu, il peut être avantageux de monter le dispositif électromécanique dans un boîtier en matière plastique comportant deux compartiments indépendants, et de le séparer ainsi du mécanisme de verrouillage, constitué par le pêne 10 et le verrou 18, par une cloison étanche. Une lumière, telle que celle indiquée en trait mixte en A sur les fig. 1 et 2, est alors prévue dans la cloison pour permettre le passage de l'ergot 100 et la transmission du mouvement d'un côté à l'autre de la cloison.

De préférence, la serrure est également munie de moyens retardateurs qui retiennent le verrou 18 pendant le déplacement d'ouverture, en évitant l'accrochage du crochet 17 sur le bec 14, dans une position de «premier cran».

Selon un mode de réalisation préféré, ces moyens retardateurs sont constitués par une bague 55 montée rotative sur l'axe 19 d'articulation du verrou 18 et munie d'un ergot 56 en saillie en direction du pêne 10 et recourbé sous le verrou 18. La bague 55 comporte par ailleurs, en un point éloigné de l'ergot 56, deux crochets 57, 58, sur lesquels sont montés deux ressorts respectivement 59 et 60, dont l'un, 59, est également fixé sur le châssis à proximité de l'axe 96 du levier 94, tandis que l'autre est également fixé sur le châssis lui-même.

Lors de l'ouverture de la portière, le levier 18 est soulevé de façon à dégager le crochet 17 du bec 15 et le pêne 10 pivote sous l'action du ressort 12. A ce moment le bec 14 vient en contact avec l'ergot 56 et repousse la bague 55 contre l'action du ressort 59, dans le sens inverse des aiguilles d'une montre, de sorte que l'ergot 56 maintient le verrou 18 soulevé et permet au bec 14 de passer sous le crochet 17 sans s'emboîter sous ce dernier. Dès que le bec 14 a quitté l'ergot 56, le ressort 59 rappelle la bague 55 dans sa position d'équilibre.

Lors de la fermeture, le bec 14 après avoir glissé sous le crochet 17 repousse l'ergot 56 en tendant le ressort 60 et permet ainsi au verrou 18 de glisser sur le bec 15 et de s'accrocher sur ce dernier. De la même manière que précédemment, la bague 55 reprend sa position d'équilibre sous l'action combinée des ressorts 59 et 60 dès que le bec 14 a quitté l'ergot 56.

Il est clair que d'autres moyens retardateurs peuvent être utilisés en combinaison avec le dispositif électromécanique selon l'invention, et même que ce dispositif peut être monté dans des serrures dont le mécanisme de verrouillage est différent. La serrure qui vient d'être décrite présente toutefois l'avantage d'être particulièrement simple à fabriquer et de comporter essentiellement des organes mécaniques susceptibles d'avoir les caractéristiques de résistance aux efforts et à l'humidité nécessaires dans une serrure de véhicule automobile. Notamment la vis et l'écrou sont de préférence en métal traité thermiquement, de façon à éviter une usure préjudiciable lors du retour de l'écrou libre le long de la vis.

## Revendications

1. Dispositif électromécanique de commande de l'ouverture d'une serrure, et notamment d'une serrure pour portière de véhicule automobile, comprenant un mécanisme de verrouillage (10, 18) destiné à bloquer une gâche (G), relié à un dispositif électromécanique (31, 72, 78) de commande de l'ouverture de la serrure par un organe de couplage coulissant (7), déplacé par le dispositif électromécanique et muni de moyens d'entraînenemt d'un verrou articulé (18) du mécanisme de verrouillage, caractérisé en ce qu'il comporte une vis (72) entraînée en rotation par un moteur électrique (31), sur laquelle se déplace en translation un écrou (78) qui est percé d'un taraudage (80) et d'un alésage (82) dont les axes se croisent, le diamètre de l'alésage (82) étant légèrement supérieur à celui de la vis (72), et qui entraîne un levier (94) agissant sur un ergot (100) de l'organe de couplage (7) afin de déplacer ce dernier et de provoquer le pivotement du verrou de la serrure dans le sens de l'ouverture, et des moyens (86, 92) pour provoquer le basculement de l'écrou entre une position d'ouverture de la serrure, dans laquelle le taraudage est en prise avec la vis, et une position de débrayage, dans laquelle l'alésage est coaxial avec la vis.

2. Dispositif suivant la revendication 1, caractérisé en ce qu'il comporte un ressort (86) monté entre un point fixe de la serrure et un point de l'écrou opposé au point de contact du levier (94) sur cet écrou.

3. Dispositif suivant la revendication 2, caractérisé en ce que le ressort (86) est un ressort de rappel de l'écrou dans sa position de départ.

4. Dispositif suivant l'une des revendications 1 à 3, caractérisé en ce que l'écrou comporte une aile en saillie (90) sur laquelle vient buter un bras (92) du levier (94), un second bras (98) de ce levier étant placé sous l'ergot (100) de l'organe de couplage.

5. Dispositif suivant l'une des revendications 2 à 4, caractérisé en ce que le ressort (86) est monté dans un trou borgne (83) pratiqué dans l'écrou, parallèlement au taraudage (80).

6. Serrure pour portière de véhicule automobile comportant un mécanisme de verrouillage (10, 18) destiné à bloquer une gâche (G), relié à un dispositif électromécanique (31) de commande de l'ouverture de la serrure par un organe de couplage coulissant (7), déplacé par le dispositif électromécanique et muni de moyens d'entraînement d'un verrou articulé (18) du mécanisme de verrouillage, caractérisée en ce que le dispositif électromécanique comporte une vis (72) entraînée en rotation par un moteur électrique (31), sur laquelle se déplace en translation un écrou (78) qui est percé d'un taraudage (80) et d'un alésage (82) dont les axes se croisent, le diamètre de l'alésage (82) étant légèrement supérieur à celui de la vis (72), et qui fait basculer un levier (94) agissant sur un ergot (100) de l'organe de couplage afin de déplacer ce dernier et de provoquer le pivotement du verrou de la serrure dans le sens de l'ouverture, et des moyens (86, 92) pour provoquer le basculement de l'écrou entre une position d'ouverture de la serrure, dans laquelle le taraudage est en prise avec la vis, et une position de débrayage, dans laquelle l'alésage est coaxial avec la vis.

## Patentansprüche

1. Elektromechanische Vorrichtung zur Öffnungsbetätigung eines Schlosses und insbesondere eines Kraftfahrzeugtürschlosses, aufweisend einen zum Arretieren eines Schliesshakens (G) bestimmten Verriegelungsmechanismus (10, 18), der mit einer elektromechanischen Vorrichtung (31, 72, 78) zur Öffnungsbetätigung des Schlosses durch ein verschiebbares Kupplungsorgan (7) verbunden ist, das durch die elektromechanische Vorrichtung verstellt wird und mit Mitteln zur Mitnahme eines angelenkten Riegels (18) des Verriegelungsmechanismus ausgestattet ist, dadurch gekennzeichnet, dass sie eine in Rotation durch einen Elektromotor (31) angetriebene Schraube (72), auf der sich in Translation eine Mutter (78) verstellt, die von einem Innengewinde (80) und einer Bohrung (82) durchbohrt ist, deren Achsen sich kreuzen, wobei der Durchmesser der Bohrung (82) etwas grösser als derjenige der Schraube (72) ist, und die einen auf einen Vorsprung (100) des Kupplungsorgans (7) wirkenden Hebel (94) antreibt, um letzteren zu verstellen und die Verschwenkung des Riegels des Schlosses in der Öffnungsrichtung herbeizuführen, und Mittel (86, 92) umfasst, um das Kippen der Mutter zwischen einer Öffnungsposition des Schlosses, in der das Innengewinde sich in Eingriff mit der Schraube befindet, und einer Ausschaltposition herbeizuführen, in der die Bohrung koaxial mit der Schraube ist.

2. Vorrichtung nach Anspruch 1, dadurch gekennzeichnet, dass sie eine zwischen einem festen Punkt des Schlosses und einem Punkt der Mutter gegenüber dem Kontaktpunkt des Hebels (94) auf dieser Mutter angebrachte Feder (86) umfasst.

3. Vorrichtung nach Anspruch 2, dadurch gekennzeichnet, dass die Feder (86) eine Feder zum Zurückstellen der Mutter in ihre Startposition ist.

4. Vorrichtung nach einem der Ansprüche 1 bis 3, dadurch gekennzeichnet, dass die Mutter einen vorspringenden Flügel (90) umfasst, auf den ein Arm (92) des Hebels (94) in Anschlag gelangt, wobei ein zweiter Arm (98) dieses Hebels unter dem Vorsprung (100) des Kupplungsorgans angeordnet ist.

5. Vorrichtung nach einem der Ansprüche 2 bis 4, dadurch gekennzeichnet, dass die Feder (86) in einem in der Mutter ausgeführten Sackloch (84) parallel zum Innengewinde (80) angebracht ist.

6. Kraftfahrzeugtürschloss, umfassend einen zum Arretieren eines Schliesshakens (G) bestimmten Verriegelungsmechanismus (10, 18), der mit einer elektromechanischen Vorrichtung (31) zur Öffnungsbetätigung des Schlosses durch ein Schiebekupplungsorgan (7) verbunden ist, das durch die elektromechanische Vorrichtung verstellt wird und mit Antriebsmitteln für einen angelenkten Riegel (18) des Verriegelungsmechanismus ausgestattet ist, dadurch gekennzeichnet, dass die elektromechanische Vorrichtung eine Schraube (72), die in Rotation durch einen Elektromotor (31) angetrieben wird, auf dem sich in Translation eine Mutter (78) verstellt, die von einem Innengewinde (80) und einer Bohrung (82) durchbohrt ist, deren Achsen sich kreuzen, wobei der Durchmesser der Bohrung (82) etwas grösser als derjenige der Schraube (72) ist, und die einen auf einen Vorsprung (100) des Kupplungsorgans wirkenden Hebel (94) zum Kippen bringt, um letztere zu verstellen und das Verschwenken des Riegels des Schlosses in der Öffnungsrichtung herbeizuführen, und Mittel (86, 92) umfasst, um das Kippen der Mutter zwischen einer Öffnungsposition des Schlosses, in der sich das Innengewinde in Eingriff mit der Schraube befindet, und einer Ausschaltposition herbeizuführen, in der die Bohrung koaxial mit der Schraube ist.

## Claims

1. Electromechanical device for controlling the opening of a lock, especially a lock for a motor-vehicle door, comprising a locking mechanism (10, 18) intended for detaining a keeper (G) and connected to an electromechanical device (31, 72, 78) for controlling the opening of the lock by means of a sliding coupling member (7) shifted by the electromechanical device and equipped with means for driving an articulated bolt (18) of the locking mechanism, characterized in that it has a screw (72) which is driven in rotation by means of an electric motor (31) and on which is shifted in a translation movement a nut (78) which has a threaded hole (80) and a bore (82), the axes of which intersect, the diameter of the bore (82) being slightly larger than that of the screw (72), and which drives a lever (94) acting on a stud (100) of the coupling member (7) in order to shift the latter and cause the bolt of the lock to pivot in the opening direction, and means (86, 92) for causing the nut to tilt between a lock-opening position, in which the threaded hole is engaged with the screw, and a disengaged position in which the bore is coaxial relative to the screw.

2. Device according to claim 1, characterized in that it possesses a spring (86) mounted between a fixed point on the lock and a point on the nut opposite the point of contact of the lever (94) on this nut.

3. Device according to claim 2, characterized in that the spring (86) is a spring for returning the nut to its initial position.

4. Device according to one of claims 1 to 3, characterized in that the nut has a projecting wing (90) which one arm (92) of the lever (94) comes up against, a second arm (98) of this lever being placed under the stud (100) of the coupling member.

5. Device according to one of claims 2 to 4, characterized in that the spring (86) is mounted in a blind hole (84) made in the nut parallel to the threaded hole (80).

6. Lock for a motor-vehicle door, comprising a locking mechanism (10, 18) intended for detaining a keeper (G) and connected to an electromechanical device (31) for controlling the opening of the lock by means of a sliding coupling member (7) shifted by the electromechanical device and equipped with means for driving an articulated bolt (18) of the locking mechanism, characterized in that the electromechanical device comprises a screw (72) which is driven in rotation by means of an electric motor (31) and on which is shifted in a translational movement a nut (78) which has a threaded hole (80) and a bore (82), the axes of which intersect, the diameter of the bore (82) being slightly larger than that of the screw (72), and which causes a lever (94) acting on a stud (100) of the coupling member to tilt, in order to shift the latter and cause the bolt of the lock to pivot in the opening direction, and means (86, 92) for causing the nut to tilt between a lock-opening position, in which the threaded hole is engaged with the screw, and a disengaged position, in which the bore is coaxial relative to the screw.

FIG.1

FIG.2

FIG.3

FIG.4